# EUROPÄISCHE PATENTANMELDUNG

(11) **EP 1 273 836 A2**
(43) Veröffentlichungstag der Anmeldung: **08.01.2003**
(21) Anmeldenummer: 02002915.3
(22) Anmeldetag: 09.02.2002
(51) Int. Cl.: F16K 1/04

(54) **Ventil**

(30) Priorität: 07.07.2001 DE 10133055
(71) Anmelder: Eggemann GmbH Armaturenfabrik, 58636 Iserlohn (DE)
(72) Erfinder: Humpert, Jürgen, 58675 Hemer (DE)
(74) Vertreter: Köchling, Conrad, Dipl.-Ing.

(57) **Zusammenfassung**

Um ein Ventil (1) für fluide Medien mit einem Gehäuse (2), dessen erstes Ende (3) an eine Zuleitung anschließbar, dessen zweites Ende (5) von einer Ventilspindel (6) durchgriffen ist, und das seitlich einen Abgang (7) für das fluide Medium aufweist, wobei die Ventilspindel (6) am zweiten Ende einen Ventilkörper (9) aufweist, der mit einem zwischen dem ersten Ende (3) und dem seitlichen Abgang (7) im Gehäuse (2) ausgebildeten Ventilsitz (10) zusammenwirkt zu schaffen, welches eine leichtgängige Betätigung ermöglicht, wobei die Anzahl der Bauteile und Dichtstellen reduziert ist, wird vorgeschlagen, dass der Ventilkörper (9) in Öffnungsstellung in einen Bereich zwischen dem Ventilsitz (10) und dem ersten Ende (3) des Gehäuses (2) verlagert ist und die Ventilspindel (6) eine umlaufende Dichtung (12) aufweist, die an der Innenwandung des Gehäuses (2) in einem Bereich zwischen dem seitlichen Abgang (7) und dem zweiten Ende (5) des Gehäuses (2) anliegt, wobei die Ventilspindel (6) mit der Dichtung (12) in der Öffnungsstellung zum Bereich des seitlichen Abgangs (7) und in der Schließstellung zum zweiten Ende (5) des Gehäuses (2) verlagert ist.

## Beschreibung

Die Erfindung betrifft ein Ventil, insbesondere Eckventil, für fluide Medien, vorzugsweise für sanitäre Anlagen, mit einem rohrartigen Gehäuse, dessen erstes Ende an eine fluidführende Zuleitung anschließbar ist, dessen zweites Ende von einer Ventilspindel durchgriffen ist, und das seitlich einen Abgang für das fluide Medium aufweist, wobei die Ventilspindel mit ihrem ersten Ende aus dem Gehäuse vorragt und eine Betätigungshandhabe aufweist und am zweiten Ende einen Ventilkörper aufweist, der mit einem zwischen dem ersten Ende und dem seitlichen Abgang im Gehäuse ausgebildeten Ventilsitz zusammenwirkt, so dass in Schließstellung der Strömungsweg vom ersten Ende zum seitlichen Abgang gesperrt und in Öffnungsstellung freigegeben ist.

Derartige Ventile, insbesondere Eckventile, werden bei sanitären Anlagen vielfältig verwendet. Diese Ventile werden nur relativ selten betätigt, nämlich dann, wenn die sanitäre Installation geändert werden soll. Ansonsten ist das Ventil im Regelfall vollständig geöffnet und liegt möglicherweise über einen Zeitraum von mehreren Jahren im Fluidstrom, insbesondere Wasserstrom. Bei herkömmlichen Ventilen dieser Art, wie sie beispielsweise in der DE 94 01 408 U1 beschrieben sind, ist auf der Spindel ein O-Ring als Dichtelement vorgesehen, der sich innenliegend an dem Durchgangskanal des Gehäuses abstützt und verhindert, dass Fluid aus dem zweiten Ende des Gehäuses austritt. Bei dieser Anordnung ist die Spindel bei geöffnetem Ventil so weit zum zweiten Ende des Gehäuses verschoben, dass der Dichtring nahe dieses Gehäuseendes angeordnet ist. Die Innenwandung des Durchgangskanals des Gehäuses liegt damit im gesamten Bereich bis zu dem O-Ring im Strömungsbereich des durchströmenden Wassers oder dergleichen. Hierdurch ist es möglich, dass sich an dem Wandungsbereich Ablagerungen, Verkrustungen oder Verkalkungen festsetzen können. Sofern das Ventil, welches beispielsweise mehrere Jahre in der geöffneten Stellung verblieben ist, dann in Schließlage verbracht werden soll, um beispielsweise Armaturen auswechseln oder andere Installationsarbeiten durchführen zu können, so kann die Spindel nicht oder nur sehr schwergängig betätigt werden, weil der die Spindel umgebende O-Ring entlang des Wandungsteiles des Gehäuses verschoben werden muss, auf welchem sich Ablagerungen, Verkrustungen oder dergleichen abgesetzt haben.

In der oben bezeichneten Druckschrift ist dieses Problem schon erkannt worden und zur Lösung dieses Problems eine Anordnung vorgesehen, wonach die Abdichtung der Ventilspindel am zweiten Ende des Gehäuses nicht mittels eines auf der Ventilspindel angeordneten O-Ringes erfolgt, sondern als Dichtelement ist in das zweite Ende des Gehäuses eine Hülse eingesetzt, die über eine außen umlaufende Dichtung gegenüber der Einsatzbohrung und über eine radial innenliegende Dichtung gegenüber der Ventilspindel abgedichtet ist. Dabei ist zwischen dieser Hülse und der Ventilspindel eine Schmiermittelaufnahmekammer angeordnet, die mit Schmiermittel gefüllt ist. Bei dieser Ausbildung wird bei geöffnetem Ventil die Ventilspindel in die Hülse eingezogen, so dass die Ventilspindel sich mit dem verschieblichen Bereich in der Schmiermittelkammer befindet. Wird das Ventil auch nach langjähriger Nichtbenutzung aus der Öffnungsstellung in die Schließstellung überführt, so ist dies in einfacher Weise möglich, weil sich auf der Ventilspindel in dem Bereich, der sich in der Schmiermittelaufnahmekammer bei geöffnetem Ventil befindet, keine Ablagerungen absetzen können.

Die vorbekannte Lösung hat sich zwar als vorteilhaft und brauchbar erwiesen, jedoch ist ein solches Ventil in der Herstellung relativ teuer, weil die zusätzliche Hülse mit zwei Dichtringen hergestellt und eingebracht werden muss.

Ausgehend von diesem Stand der Technik liegt der Erfindung die Aufgabe zugrunde, ein Ventil gattungsgemäßer Art zu schaffen, welches nach wie vor auch nach langer Öffnungszeit und langer Benutzungsdauer eine einwandfreie und leichtgängige Betätigung im Sinne des Schließens und Öffnens des Ventiles ermöglicht, wobei aber die Anzahl der notwendigen Bauteile und die Anzahl der Dichtstellen wesentlich reduziert ist.

Zur Lösung dieser Aufgabe schlägt die Erfindung vor, dass der Ventilkörper in Öffnungsstellung in einen Bereich verlagert ist, der sich zwischen dem Ventilsitz und dem ersten Ende des Gehäuses befindet, und dass die Ventilspindel eine umlaufende Dichtung aufweist, die an der Innenwandung des Gehäuses anliegt und zwar in einem Bereich zwischen dem seitlichen Abgang und dem zweiten Ende des Gehäuses, wobei die Ventilspindel mit der Dichtung in der Öffnungsstellung zum Bereich des seitlichen Abgangs und in der Schließstellung zum zweiten Ende des Gehäuses verlagert ist.

Im Stand der Technik wird der Ventilkörper in Schließlage in eine Position verschoben, in der er sich im Bereich zwischen dem ersten Ende des Gehäuses und dem seitlichen Abgang befindet. In der Öffnungsstellung wird der Ventilkörper zum zweiten Ende des Gehäuses hin so weit verlagert, dass der seitliche Abgang frei liegt.

Entgegen dieser bekannten Ausbildung ist das erfindungsgemäße Ventil so gestaltet, dass der Ventilkörper in der Öffnungsstellung in einen Bereich verlagert ist, der sich zwischen dem Ventilsitz und dem ersten Ende des Gehäuses befindet. Dabei wird bei der Öffnung des Ventiles die Ventilspindel mit der umlaufenden Dichtung aus einer Position, die dem zweiten Ende des Gehäuses angenähert ist, in eine Position, die weiter dem ersten Ende des Gehäuses angenähert ist, sich aber noch jenseits des seitlichen Abganges befindet verschoben. Der Dichtring der Ventilspindel schließt also den Bewegungsraum, auf welchem die Dichtung beim Schließen des Ventiles gleiten kann, bei in Öffnungsstellung befindlichem Ventil ab, so dass dort kein fluides Medium, insbesondere Wasser, einströmen kann und somit die Ablagerung von Verkrustungen oder dergleichen verhindert ist. Wird das Ventil geschlossen, so gleitet die umlaufende Dichtung durch die entsprechende Bewegung der Ventilspindel aus dem Bereich, der dem seitlichen Abgang nahe liegt, in einen Bereich, der dem zweiten Ende des Gehäuses nahe liegt. Damit ist in dieser Position zwar der Wandungsbereich, auf dem die Dichtung gleitet, in Richtung auf das erste Ende des Gehäuses freigelegt, jedoch strömt bei geschlossenem Ventil kein Fluid, insbesondere Wasser, durch diesen Bereich, so dass sich Ablagerungen nicht festsetzen können.

Allein aufgrund dieser Gestaltung ist die gewünschte Funktion des Ventiles sichergestellt, wobei auf die im Stand der Technik notwendigen, aufwändigen Maßnahmen bezüglich der Anordnung einer zusätzlichen Hülse mit weiteren Dichtstellen verzichtet werden kann.

Um die Leichtgängigkeit der Ventilbetätigung noch zu fördern, ist vorgesehen, dass die Innenwandung des Gehäuses mindestens in dem Bereich, in dem sich die Dichtung axial bewegt, mit korrosionshemmenden Beschichtungen und/oder mit reibungsmindernden Beschichtungen und/oder mit eine Ablagerung von Verunreinigungen oder Verkalkungen hemmenden Beschichtungen versehen ist oder aus entsprechendem Material besteht.

Im Prinzip können sich an der Innenwandung des Gehäuses in dem Bereich, in welchem sich die Dichtung axial bewegen kann, bei über lange Zeit geöffnetem Ventil Korrosionen bilden. Um dieses zu vermeiden, ist die Innenwandung des Gehäuses mindestens in diesem Bereich mit einer entsprechenden Beschichtung versehen oder aus entsprechendem Material gefertigt. Eine entsprechende Beschichtung kann beispielsweise aus PTFE bestehen. Auch kann das Gehäuse selbst aus korrosionshemmendem Material bestehen, so dass eine Schwergängigkeit der Ventilbetätigung aufgrund von Korrosionserscheinungen oder dergleichen vermieden ist.

Eine besonders bevorzugte Weiterbildung wird darin gesehen, dass in dem Bereich, in dem sich die Dichtung axial bewegt, zwischen der Innenwandung des Gehäuses und dem Außenmantel der Spindel eine Ringkammer gebildet ist, die mit Fett oder anderem Schmierstoff gefüllt ist.

Gemäß dieser Anordnung ist in dem Bewegungsbereich der Dichtung eine sehr eng bemessene Ringkammer ausgebildet, die mit Fett oder anderem Schmierstoff gefüllt ist. Hierdurch werden Korrosionserscheinungen in diesem Bereich verhindert, und zudem wird eine leichtgängige Betätigung und eine leichtgängige Verschiebung der Dichtung auf der entsprechenden Innenwandung des Gehäuses gefördert.

Eine bevorzugte Weiterbildung wird darin gesehen, dass die Spindel im Bereich der Dichtungsanordnung einen radial vorragenden Kragen mit einer Einlegenut für die Dichtung aufweist, der radial an der Innenwandung des Gehäuses anliegt.

Zudem kann vorgesehen sein, dass die Spindel in dem Bereich zwischen Dichtung und erstem Ende Außengewinde und das Gehäuse am zweiten, von der Spindel durchgriffenen Ende passendes Innengewinde aufweist.

Um einen großen Durchfluss von Fluid durch das Ventil bei geöffnetem Ventil zu ermöglichen kann vorgesehen sein, dass die Spindel im Bereich zwischen der Dichtung und dem Ventilkörper radial verjüngt ist.

In jedem Falle ist natürlich der Ventilkörper so ausgebildet, dass bei geöffnetem Ventil ein Strömungsringspalt zwischen Ventilkörper und umgebender Gehäusewandung gebildet ist. Lediglich in Schließlage des Ventils stützt sich der Ventilkörper mit einer entsprechenden Dichtung am Ventilsitz dichtend ab.

Eine besonders bevorzugte Ausbildung wird zudem darin gesehen, dass das Gehäuse einen sich vom ersten Ende zum zweiten Ende nach Art einer Stufenbohrung verjüngenden Durchgang aufweist, deren größter Durchmesserbereich vom ersten Ende bis nahe des seitlichen Abgangs reicht und dort eine Stufe als Ventilsitz für den Ventilkörper bildet, an die Stufe ein verjüngter Bereich anschließt, der bis nahe des zweiten Endes verläuft und dort eine Stufe als Endwandteil für eine Ringkammer zur Fett- oder Schmiermittelaufnahme bildet, an die ein weiter verjüngter Bereich anschließt, der den gewindeten Spindeldurchgriff bildet.

Gemäß dieser Ausbildung ist eine äußerst einfache Fertigung des Gehäuses ermöglicht, da die entsprechende Stufenbohrung bei einer einmaligen Einspannung des Gehäuses gebohrt werden kann, beispielsweise aus einem massiven Stangenmaterial oder einem entsprechend dickwandigen Rohrkörper.

Zudem wird als vorteilhaft angesehen, dass der Ventilkörper an seinem dem ersten Ende des Gehäuses zugewandten Ende stirnseitig einen Werkzeugeingriff aufweist und an der gegenüberliegenden, dem Ventilsitz zugewandten Seite einen mit dem kragenartigen Ventilsitz zusammenwirkenden Dichtring hält.

Eine bevorzugte Ausbildung wird zudem darin gesehen, dass das Gehäuse ein Drehteil mit einem eine Stufenbohrung bildenden axialen Durchgang ist, wobei der seitliche Abgang durch ein in eine radiale Lochung des Gehäuses eingesetztes, rohrartiges Drehteil gebildet ist, das mit dem Gehäuse pressverschweißt ist.

Bevorzugt ist insbesondere auch vorgesehen, dass das Gehäuse und der seitliche Abgang aus rostfreiem Edelstahl bestehen.

Eine vorteilhafte Weiterbildung wird darin gesehen, dass an dem Ende des Gehäuses, aus dem die Ventilspindel austritt, radial außen liegend Schlüsselflächen zum Ansatz eines Montageschlüssels ausgebildet sind, und dass die Schlüsselflächen in der Öffnungsstellung des Ventils durch die Betätigungshandhabe abgedeckt sind.

Hierdurch ist sichergestellt, dass die Schlüsselflächen in der Normalbetriebsstellung des Ventils (Öffnungsstellung) für den Benutzer unsichtbar sind, so dass insbesondere auch Schadstellen an den Schlüsselflächen, die bei der Montage entstanden sind, nicht in Erscheinung treten.

Ein Ausführungsbeispiel der Erfindung ist in der Zeichnung dargestellt und im Folgenden näher beschrieben.

Es zeigt:
- Figur 1: ein erfindungsgemäßes Ventil im Mittel-Längsschnitt in Öffnungslage;
- Figur 2: desgleichen in Schließlage.

Bei dem in der Zeichnung dargestellten Ventil 1 handelt es sich um ein Eckventil für sanitäre Anlagen. Das Ventil weist ein rohrartiges, gerades Gehäuse 2 auf, dessen erstes Ende 3 an eine in der Zeichnung nicht dargestellte wasserführende Leitung angeschlossen werden kann, wobei zur Abdeckung der Anschlussstelle eine Abdeckrosette 4 verschieblich auf dem Gehäuse 2 angeordnet ist. Das zweite Ende 5 des Gehäuses 2 ist von einer Ventilspindel 6 durchgriffen. Das Gehäuse 2 weist seitlich einen radial abgehenden Abgang 7 mit Quetschverschraubung für das fluide Medium auf. Üblicherweise kann hier ein Anschlussrohr einer Armatur eingesetzt und durch die Quetschverschraubung gedichtet werden.

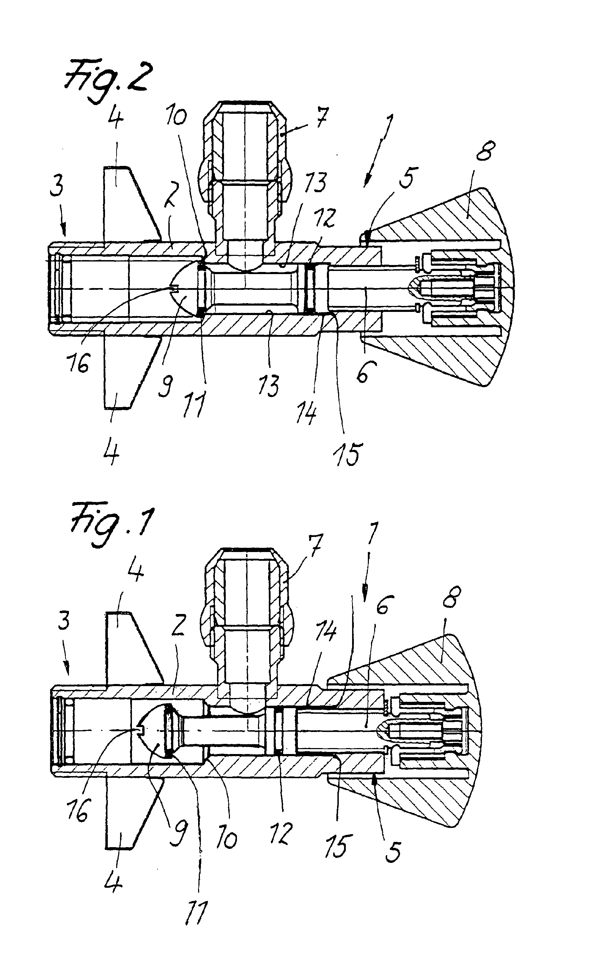

Die Ventilspindel 6 ragt mit ihrem ersten Ende aus dem zweiten Ende 5 des Gehäuses vor, wobei auf das überragende Ende der Ventilspindel 6 eine Betätigungshandhabe 8 aufgesetzt ist, die drehfest mit der Spindel 6 verbunden ist. An ihrem zweiten Ende weist die Ventilspindel 6 einen Ventilkörper 9 auf, der im Durchmesser kleiner als der umgebende Gehäusekanal des Gehäuses 2 ausgebildet ist, so dass bei geöffnetem Ventil ein Strömungsspalt zwischen dem Ventilkörper 9 und der umgebenden Wandung des Gehäuses 2 gebildet ist. Der Ventilkörper 9 trägt auf seiner einem Ventilsitz 10 zugewandten Seite einen Dichtring 11, der mit dem im Gehäusekanal vorgesehenen Ventilsitz 10 in Schließlage des Ventils zusammenwirkt. Damit ist in Schließstellung gemäß Figur 2 der Strömungsweg vom ersten Ende 3 des Gehäuses 2 zum seitlichen Abgang 7 abgesperrt, während dieser Strömungsweg in der Öffnungsstellung gemäß Figur 1 freigegeben ist.

Der Ventilkörper 9 ist in der Öffnungsstellung gemäß Figur 1 in einen Bereich des Gehäuses 2 verlagert, der sich zwischen dem Ventilsitz 10 und dem ersten Ende 3 des Gehäuses 2 befindet. Die Ventilspindel 6 weist dabei eine umlaufende Dichtung 12 auf, die an der Innenwandung des Kanals des Gehäuses 2 anliegt, und zwar in einem Bereich zwischen dem seitlichen Abgang 7 und dem zweiten Ende 5 des Gehäuses. Sofern das Ventil 1 aus der Schließlage gemäß Figur 2 in die Öffnungslage gemäß Figur 1 verstellt wird, so ist die Ventilspindel 6 mit der Dichtung 12 zum Bereich des seitlichen Abgangs 7 hin verlagert, so dass der Wandungsbereich der Gehäusebohrung, der von der Dichtung 12 überstrichen wird, gegen das durchströmende Wasser oder dergleichen geschützt ist. Ablagerungen oder dergleichen können sich also in diesem Wandungsbereich nicht bilden. Lediglich in der Schließstellung, die in Figur 2 gezeigt ist, ist die Ventilspindel 6 mit der Dichtung 12 zum zweiten Ende 5 des Gehäuses 2 hin verlagert, so dass der von der Dichtung 12 überstrichene Bereich in Richtung auf das erste Ende 3 des Gehäuses 2 frei liegt. In dieser Position können sich aber keine Ablagerungen an dem von der Dichtung 12 überstrichenen Wandungsbereich absetzen, da das Wasser oder dergleichen nicht durchströmt.

Die Innenwandung des Gehäuses 2 kann mindestens in dem Bereich 13, in dem sich die Dichtung 12 durch die Bewegung der Spindel 6 axial bewegt, mit korrosionshemmenden Beschichtungen versehen sein.

Zusätzlich ist in dem Bereich, in dem sich die Dichtung 12 axial bewegt, zwischen der Innenwandung des Gehäuses 2 und dem Außenmantel der Spindel 6 eine Ringkammer 14 gebildet, die mit Fett oder anderem Schmierstoff gefüllt ist.

Die Spindel 6 weist im Bereich der Anordnung der Dichtung 12 einen radial vorragenden Kragen mit einer Einlegenut für den Dichtring 12 auf, der dichtend an der Innenwandung des Gehäuses 2 anliegt.

Die Spindel 6 weist in dem Bereich zwischen dem Kragen, der die Dichtung 12 hält, und dem ersten Ende der Spindel 6, die die Handhabe 8 trägt, Außengewinde auf, während das Gehäuse 2 im von der Spindel 6 durchgriffenen Bereich passendes Innengewinde aufweist. Vorzugsweise ist dieses Gewinde als Linksgewinde ausgebildet, so dass trotz der andersartigen Ventilöffnung und Schließbewegung für den Benutzer die übliche Betätigung möglich ist, also bei Linksdrehung Öffnen und bei Rechtsdrehung Schließen des Ventils.

Die Spindel 6 ist zudem im Bereich zwischen der Dichtung 12, bzw. dem die Dichtung 12 tragenden Kragen und dem Ventilkörper 9 radial verjüngt, um einen relativ großen Strömungsquerschnitt freizulegen.

Das Gehäuse 2 weist zur Erleichterung der Fertigung einen sich vom ersten Ende 3 zum zweiten Ende 5 nach Art einer Stufenbohrung mehrfach verjüngenden Durchgang auf, wobei der Durchmesser der Stufenbohrung vom ersten Ende 3 bis nahe des seitlichen Abgangs 7 am größten ist. Es wird dann eine Stufung noch vor dem seitlichen Abgang 7 auf einen geringeren Innendurchmesser gebildet, wobei die Stufe den Ventilsitz 10 für den Ventilkörper 9 bildet. Von der Stufe (10) geht ein durchmesser-verjüngter Bereich in Richtung auf das zweite Ende weiter, der bis nahe des zweiten Endes 5 verläuft und dort eine Stufe 15 als Endwandteil für die Ringkammer 14 bildet. An diese Stufung 15 schließt sich ein weiter verjüngter Bereich an, der den gewindeten Spindeldurchgriff bildet.

Für die Montage ist vorteilhaft, dass der Ventilkörper 9 an seinem dem ersten Ende 3 des Gehäuses 2 zugewandten Ende stirnseitig einen Werkzeugeingriff 16 aufweist, während er an der gegenüberliegenden, dem Ventilsitz 10 zugewandten Seite den mit dem kragenartigen Ventilsitz 10 zusammenwirkenden Dichtring 11 hält.

Der seitliche Abgang 7 ist durch ein in eine radiale Lochung des Gehäuses 2 eingesetztes, rohrartiges Drehteil gebildet, das mit dem Gehäuse 2 vorzugsweise pressverschweißt ist.

Zur Vermeidung von Korrosionserscheinungen und auch aus optischen Gründen ist mindestens das Gehäuse 2 und der seitliche Abgang 7 aus rostfreiem Edelstahl gefertigt.

Im Ausführungsbeispiel ist ein äußerst funktionstüchtiges, über lange Zeitdauer einfach und leicht betätigbares Ventil gezeigt, welches äußerst kostengünstig aus wenigen Bestandteilen zusammengesetzt werden kann.

Zur Montage wird die Ventilspindel durch das erste Ende 3 des Gehäuses 2 zugeführt und gewindemäßig in das zweite Ende des Gehäuses 5 eingeschraubt, so dass nachfolgend die Drehhandhabe 8 aufgesteckt werden kann. Das Ventil ist dann funktionstüchtig.

Vorteilhaft bei der erfindungsgemäßen Gestaltung ist darüber hinaus, dass aufgrund der besonderen Kinematik des Ventiles die Drehhandhabe 8 bei geöffnetem Ventil gemäß Darstellung in Figur 1 dem Gehäuse 2 weiter angenähert ist, als in der Schließlage gemäß Figur 2. Da die Öffnungslage gemäß Figur 1 im Wesentlichen den Dauerzustand darstellt, stellt die Drehhandhabe 8 einen weniger auffälligen Überstand über das Gehäuse 2 dar, was auch eine mögliche Verletzungsgefahr an der nur gering vorstehenden Drehhandhabe 8 mindert.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Ventil (1), insbesondere Eckventil, für fluide Medien, vorzugsweise für sanitäre Anlagen mit einem rohrartigen Gehäuse (2), dessen erstes Ende (3) an eine fluidführende Zuleitung anschließbar ist, dessen zweites Ende (5) von einer Ventilspindel (6) durchgriffen ist, und das seitlich einen Abgang (7) für das fluide Medium aufweist, wobei die Ventilspindel (6) mit ihrem ersten Ende aus dem Gehäuse (2) vorragt und eine Betätigungshandhabe (8) aufweist und am zweiten Ende einen Ventilkörper (9) aufweist, der mit einem zwischen dem ersten Ende (3) und dem seitlichen Abgang (7) im Gehäuse (2) ausgebildeten Ventilsitz (10) zusammenwirkt, so dass in Schließstellung der Strömungsweg vom ersten Ende (3) zum seitlichen Abgang (7) gesperrt und in Öffnungsstellung freigegeben ist, **dadurch gekennzeichnet, dass** der Ventilkörper (9) in Öffnungsstellung in einen Bereich verlagert ist, der sich zwischen dem Ventilsitz (10) und dem ersten Ende (3) des Gehäuses (2) befindet, und dass die Ventilspindel (6) eine umlaufende Dichtung (12) aufweist, die an der Innenwandung des Gehäuses (2) anliegt und zwar in einem Bereich zwischen dem seitlichen Abgang (7) und dem zweiten Ende (5) des Gehäuses (2), wobei die Ventilspindel (6) mit der Dichtung (12) in der Öffnungsstellung zum Bereich des seitlichen Abgangs (7) und in der Schließstellung zum zweiten Ende (5) des Gehäuses (2) verlagert ist.

2. Ventil Nach Anspruch 1, **dadurch gekennzeichnet, dass** die Innenwandung des Gehäuses (2) mindestens in dem Bereich (13), in dem sich die Dichtung (12) axial bewegt, mit korrosionshemmenden Beschichtungen und/oder mit reibungsmindernden Beschichtungen und/oder mit eine Ablagerung von Verunreinigungen oder Verkalkungen hemmenden Beschichtungen versehen ist oder aus entsprechendem Material besteht.

3. Ventil nach einem der Ansprüche 1 oder 2, **dadurch gekennzeichnet, dass** in dem Bereich, in dem sich die Dichtung (12) axial bewegt, zwischen der Innenwandung des Gehäuses (2) und dem Außenmantel der Spindel (6) eine Ringkammer (14) gebildet ist, die mit Fett oder anderem Schmierstoff gefüllt ist.

4. Ventil nach einem der Ansprüche 1 bis 3, **dadurch gekennzeichnet, dass** die Spindel (6) im Bereich der Dichtungsanordnung einen radial vorragenden Kragen mit einer Einlegenut für die Dichtung (12) aufweist, die radial an der Innenwandung des Gehäuses (2) anliegt.

5. Ventil nach einem der Ansprüche 1 bis 4, **dadurch gekennzeichnet, dass** die Spindel (6) in dem Bereich zwischen Dichtung (12) und erstem Ende Außengewinde und das Gehäuse (2) am zweiten, von der Spindel (6) durchgriffenen Ende (5) passendes Innengewinde aufweist.

6. Ventil nach einem der Ansprüche 1 bis 5, **dadurch gekennzeichnet, dass** die Spindel (6) im Bereich zwischen der Dichtung (12) und dem Ventilkörper (9) radial verjüngt ist.

7. Ventil nach einem der Ansprüche 1 bis 6, **dadurch gekennzeichnet, dass** das Gehäuse (2) einen sich vom ersten Ende zum zweiten Ende nach Art einer Stufenbohrung verjüngenden Durchgang aufweist, deren größter Durchmesserbereich vom ersten Ende (3) bis nahe des seitlichen Abgangs (7) reicht und dort eine Stufe als Ventilsitz (10) für den Ventilkörper (9) bildet, an die Stufe ein verjüngter Bereich anschließt, der bis nahe des zweiten Endes (5) verläuft und dort eine Stufe (15) als Endwandteil für eine Ringkammer (14) zur Fettoder Schmiermittelaufnahme bildet, an die ein weiter verjüngter Bereich anschließt, der den gewindeten Spindeldurchgriff bildet.

8. Ventil nach einem der Ansprüche 1 bis 7, **dadurch gekennzeichnet, dass** der Ventilkörper (9) an seinem dem ersten Ende (3) des Gehäuses (2) zugewandten Ende stirnseitig einen Werkzeugeingriff (16) aufweist und an der gegenüberliegenden, dem Ventilsitz (10) zugewandten Seite einen mit dem kragenartigen Ventilsitz (10) zusammenwirkenden Dichtring (11) hält.

9. Ventil nach einem der Ansprüche 1 bis 8, **dadurch gekennzeichnet, dass** das Gehäuse (2) ein Drehteil mit einem eine Stufenbohrung bildenden axialen Durchgang ist, wobei der seitliche Abgang (7) durch ein in eine radiale Lochung des Gehäuses (2) eingesetztes, rohrartiges Drehteil gebildet ist, das mit dem Gehäuse (2) pressverschweißt ist.

10. Ventil nach einem der Ansprüche 1 bis 9, **dadurch gekennzeichnet, dass** das Gehäuse (2) und der seitliche Abgang (7) aus rostfreiem Edelstahl bestehen.

11. Ventil nach einem der Ansprüche 1 bis 10, **dadurch gekennzeichnet, dass** an dem Ende des Gehäuses (2), aus dem die Ventilspindel (6) austritt, radial außen liegend Schlüsselflächen zum Ansatz eines Montageschlüssels ausgebildet sind, und dass die Schlüsselflächen in der Öffnungsstellung des Ventils durch die Betätigungshandhabe (8) abgedeckt sind.
